# EUROPÄISCHE PATENTSCHRIFT

(11) **EP 3 724 502 B1**
(45) Veröffentlichungstag und Bekanntmachung des Hinweises auf die Patenterteilung: **29.09.2021**
(21) Anmeldenummer: 18808256.4
(22) Anmeldetag: 19.11.2018
(51) Int. Cl.: F04B 11/00, F04B 9/103, F04B 9/10

(54) **KRAFTSTOFFFÖRDEREINRICHTUNG FÜR KRYOGENE KRAFTSTOFFE**
FUEL DELIVERY DEVICE FOR CRYOGENIC FUELS
DISPOSITIF D'ALIMENTATION EN CARBURANT POUR CARBURANTS CRYOGÉNIQUES

(30) Priorität: 11.12.2017 DE 102017222419
(43) Veröffentlichungstag der Anmeldung: 21.10.2020
(73) Patentinhaber: Robert Bosch GmbH, 70442 Stuttgart (DE)
(72) Erfinder: NAGL, Christoph Stefan, 2534 Alland (AT); KLEIN, Ekkehardt, 3434 Wien (AT); ADLER, Robert, 2201 Gerasdorf (AT); FAHRTHOFER, Georg, 2000 Stockerau (AT)
(86) Internationale Anmeldenummer: PCT/EP2018/081702
(87) Internationale Veröffentlichungsnummer: WO 2019/115158

(56) Entgegenhaltungen:
- EP-A1- 2 541 062
- DE-A1- 19 948 443
- DE-C1- 19 621 897

## Beschreibung

Die Erfindung betrifft eine Kraftstofffördereinrichtung für kryogene Kraftstoffe mit den Merkmalen des Oberbegriffs des Anspruchs 1.

Bei dem kryogenen Kraftstoff kann es sich insbesondere um Erdgas ("Natural Gas" = NG) handeln, das beispielsweise an Bord eines Kraftfahrzeugs zum Betreiben einer Brennkraftmaschine in flüssiger Form ("Liquefied Natural Gas" = LNG) in einem speziell dafür ausgelegten Tank bevorratet wird.

### Stand der Technik

Aus der EP 2 541 062 A1 ist eine Kolbenpumpe für kryogene Kraftstoffe, insbesondere für Erdgas, mit einem hin- und herbeweglichen Pumpenkolben bekannt. Der Pumpenkolben begrenzt einen Pumpenarbeitsraum, der mit flüssigem Erdgas befüllbar ist, so dass im Pumpenarbeitsraum vorhandenes flüssiges Erdgas über eine Hubbewegung des Pumpenkolbens mit Hochdruck beaufschlagbar ist. Andernends begrenzt der Pumpenkolben einen Druckraum, der mit einem hydraulischen Druckmittel befüllbar ist, um den Pumpenkolben in einer Hubbewegung anzutreiben. Alternativ wird ein elektrischer, pneumatischer oder mechanischer Antrieb vorgeschlagen.

Die Hin- und Herbewegung des Pumpenkolbens führt im Betrieb der Kolbenpumpe zu oszillierenden Massenkräften. Zur Kompensation derartiger Kräfte sind aus dem Stand der Technik rotierende Verfahren bekannt, bei denen eine definierte Unwucht an einer Ausgleichswelle rotiert. Die durch die Unwucht erzeugten Massenkräfte an der Ausgleichswelle wirken dabei den oszillierenden Massenkräften des Pumpenkolbens entgegen.

Aufgabe der vorliegenden Erfindung ist es, einen Ausgleich oszillierender Massenkräfte ohne rotierende Bauteile zu schaffen, so dass rotierende Komponenten und Wellenlager verzichtbar sind.

Zur Lösung der Aufgabe wird die Kraftstofffördereinrichtung mit den Merkmalen des Anspruchs 1 vorgeschlagen. Vorteilhafte Weiterbildungen der Erfindung sind den Unteransprüchen zu entnehmen.

### Offenbarung der Erfindung

Die vorgeschlagene Kraftstofffördereinrichtung für kryogene Kraftstoffe umfasst eine Kolbenpumpe zur Förderung des kryogenen Kraftstoffs auf Hochdruck. Die Kolbenpumpe weist einen hin- und herbeweglichen Pumpenkolben auf, der einenends einen Kompressionsraum und andernends einen in einem Hohlzylinder ausgebildeten Druckraum begrenzt, der mit einem hydraulischen Druckmittel beaufschlagbar ist. Erfindungsgemäß trennt der Pumpenkolben den Druckraum von einem Hydraulikvolumen, das ein innerhalb des Hohlzylinders ausgebildetes erstes Teilvolumen sowie mindestens ein außerhalb des Hohlzylinders ausgebildetes und von einer hin- und herbeweglichen Ausgleichsmasse begrenztes weiteres Teilvolumen umfasst. Über das Hydraulikvolumen ist demnach der Pumpenkolben mit der Ausgleichsmasse hydraulisch gekoppelt, so dass die Bewegung des Pumpenkolbens zu einer Bewegung der Ausgleichsmasse führt. Die Bewegung der Ausgleichmasse führt dabei zu einem Ausgleich der oszillierenden Massenkräfte, und zwar ohne rotierende Bauteile.

Vorzugsweise bewegt sich die Ausgleichsmasse in eine Richtung, die der Bewegungsrichtung des Pumpenkolbens entgegengesetzt ist. Dies ist der Fall, wenn die Ausgleichsmasse auf der Seite des Hydraulikvolumens angeordnet ist, auf der sich auch der Pumpenkolben befindet. Bewegt sich der Pumpenkolben im Verdichtungstakt der Kolbenpumpe von einer unteren Endlage in eine obere Endlage, verkleinert sich das durch den Pumpenkolben begrenzte Teilvolumen, während sich das mit dem Teilvolumen verbundene weitere Teilvolumen vergrößert, so dass sich die das weitere Teilvolumen begrenzende Ausgleichsmasse in Richtung der unteren Endlage des Pumpenkolbens bewegt. Dies ermöglicht eine besonders kompaktbauende Anordnung der Ausgleichsmasse innerhalb der Kolbenpumpe.

Gemäß einer bevorzugten Ausführungsform der Erfindung ist die Ausgleichsmasse gegen das Hydraulikvolumen mechanisch oder pneumatisch vorgespannt. Die Vorspannung der Ausgleichsmasse führt zu einer sicheren Rückstellung der Ausgleichsmasse, wenn der Pumpenkolben sich im Saugtakt der Kolbenpumpe von der oberen Endlage zurück in seine untere Endlage bewegt. Die Vorspannung kann sowohl mittels einer mechanischen Feder, beispielsweise einer Schraubendruckfeder, als auch pneumatisch, das heißt mittels einer Gasfeder bewirkt werden. Die Ausgleichsmasse wird hierzu auf ihrer dem Hydraulikvolumen abgewandten Seite dauerhaft mit Gasdruck beaufschlagt.

Des Weiteren wird vorgeschlagen, dass die Masse der Ausgleichsmasse im Wesentlichen der Masse des Pumpenkolbens entspricht. Auf diese Weise kann ein vollständiger oder zumindest annähernd vollständiger Ausgleich der oszillierenden Massenkräfte erreicht werden.

Die Ausgleichsmasse kann beispielsweise ring- oder hülsenförmig ausgeführt sein, so dass sie den Hohlzylinder umgibt. Über den Hohlzylinder kann auf diese Weise eine Führung der Ausgleichsmasse bewirkt werden. Die Innenkontur der Ausgleichsmasse ist hierzu bevorzugt an die Außenkontur des Hohlzylinders angepasst. In Abhängigkeit von der Außenkontur des Hohlzylinders kann demnach die Querschnittsform der Ausgleichsmasse kreisförmig, elliptisch oder vieleckig sein.

Ferner wird vorgeschlagen, dass die Ausgleichsmasse konzentrisch in Bezug auf den Pumpenkolben angeordnet ist. Auf diese Weise bleibt das System frei von etwaigen Massenmomenten.

Die Ausgleichsmasse kann zudem mehrteilig ausgeführt sein. Sofern die mehreren Teile nicht hintereinander, sondern nebeneinander angeordnet sind, ist vorzugsweise jedem Teil ein weiteres Teilvolumen des Hydraulikvolumens zugeordnet. Weiterhin vorzugsweise sind die mehreren Teile in einer Ebene, in gleichem Winkelabstand zueinander und in gleichem radialen Abstand zum Pumpenkolben angeordnet.

Darüber hinaus kann eine ring- oder hülsenförmige Ausgleichsmasse mit mehreren Teilmassen kombiniert werden, die in diesem Fall ebenfalls in gleichem Winkelabstand zueinander an der ring- oder hülsenförmigen Ausgleichsmasse befestigt werden. Die Teilmassen ermöglichen eine genaue Abstimmung der Masse der Ausgleichsmasse in Bezug auf die Masse des Pumpenkolbens.

Bevorzugt weist die Ausgleichsmasse mindestens einen innenumfangseitig und/oder außenumfangseitig angeordneten Dichtring auf, der das Hydraulikvolumen gegenüber einem Gasvolumen abdichtet. Über den mindestens einen Dichtring wird eine Medientrennung bewirkt, die einer Leckage aus dem Hydraulikvolumen in Richtung des Gasvolumens bzw. umgekehrt entgegenwirkt.

Des Weiteren bevorzugt weist der Pumpenkolben außenumfangseitig mindestens eine Hydraulikdichtung zur Abdichtung des Hydraulikvolumens gegenüber dem Druckraum auf. Dadurch ist sichergestellt, dass die Bewegung des Pumpenkolbens zu einer Bewegung der Ausgleichsmasse führt, da das Hydraulikmedium im ersten Teilvolumen nur in das mindestens eine weitere Teilvolumen des Hydraulikvolumens entweichen kann.

Ferner wird vorgeschlagen, dass im Hohlzylinder mindestens eine Radialbohrung zur Verbindung der Teilvolumina des Hydraulikvolumens ausgebildet ist. Die Radialbohrung verbindet das innerhalb des Hohlzylinders ausgebildete Teilvolumen mit dem mindestens einen außerhalb des Hohlzylinders ausgebildeten Teilvolumen.

Vorteilhafterweise wird das Hydraulikvolumen radial außen durch einen weiteren Hohlzylinder begrenzt. Der das Hydraulikvolumen nach außen abschließende weitere Hohlzylinder ermöglicht eine kompaktbauende Form der Kolbenpumpe. Der weitere Hohlzylinder ist vorzugsweise konzentrisch zum ersten Hohlzylinder angeordnet, so dass zwischen den beiden Hohlzylindern ein Ringraum verbleibt, der vorzugsweise ein Teilvolumen des Hydraulikvolumens ausbildet. In diesem Teilvolumen kann insbesondere eine ring- oder hülsenförmige Ausgleichsmasse angeordnet werden.

Eine bevorzugte Ausführungsform der Erfindung wird nachfolgend anhand der beigefügten Zeichnungen näher erläutert. Diese zeigen:
- Fig. 1: einen schematischen Längsschnitt durch eine Kolbenpumpe einer erfindungsgemäßen Kraftstofffördereinrichtung im Bereich des antriebsseitigen Endes der Kolbenpumpe,
- Fig. 2: ein Diagramm zur graphischen Darstellung der oszillierenden Massen und
- Fig. 3: ein Diagramm zur graphischen Darstellung des Massenausgleichs.

### Ausführliche Beschreibung der Zeichnungen

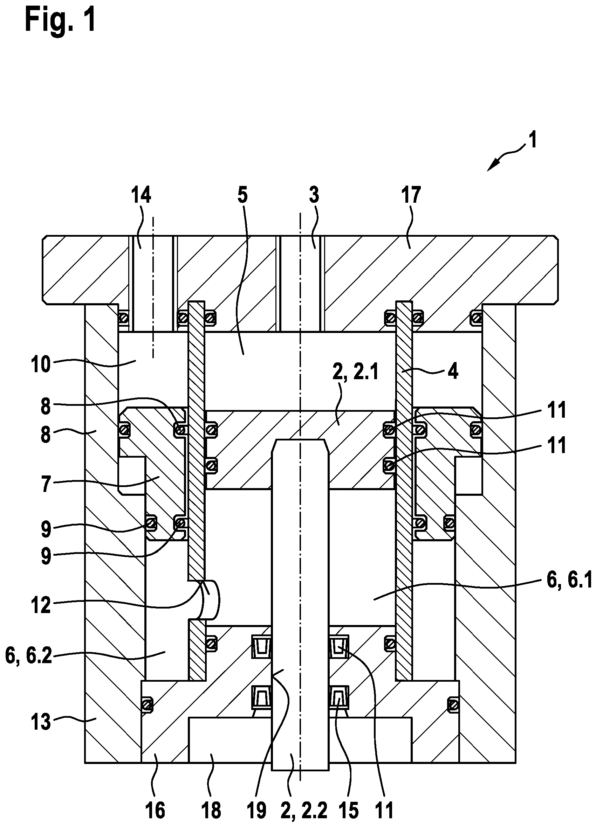

Die in der Fig. 1 dargestellte erfindungsgemäße Kraftstofffördereinrichtung dient der Versorgung einer Brennkraftmaschine (nicht dargestellt) eines Kraftfahrzeugs mit Kraftstoff, wobei es sich um einen kryogenen Kraftstoff, vorzugsweise um Erdgas, handelt. Die Kraftstofffördereinrichtung umfasst eine Kolbenpumpe 1 zur Förderung des Kraftstoffs auf Hochdruck.

Die Kolbenpumpe 1 weist einen hin- und herbeweglichen Pumpenkolben 2 mit einem Kolbenteil 2.1 und einer Kolbenstange 2.2 auf. Das Kolbenteil 2.1 ist in einem Hohlzylinder 4 aufgenommen und begrenzt innerhalb des Hohlzylinders 4 einen Druckraum 5, der über einen Hydraulikanschluss 3 mit einem Hydraulikmedium, vorzugsweise mit Öl, insbesondere mit Motoröl, beaufschlagbar ist. Bei einer Beaufschlagung des Druckraums 5 mit dem Hydraulikmedium bewegt sich der Pumpenkolben 2 von einer unteren Endlage (in der Fig. 1 "oben") in Richtung einer oberen Endlage (in der Fig. 1 "unten"), so dass in einem Kompressionsraum (nicht dargestellt) vorhandener Kraftstoff verdichtet wird. Durch diese Bewegung verdrängt der Pumpenkolben 2 ein Hydraulikmedium aus einem innerhalb des Hohlzylinders 4 ausgebildeten ersten Teilvolumen 6.1 eines Hydraulikvolumens 6 in ein außerhalb des Hohlzylinders 4 ausgebildetes weiteres Teilvolumen 6.2, das über eine im Hohlzylinder 4 ausgebildete Radialbohrung 12 mit dem ersten Teilvolumen 6.1 verbunden ist. Das weitere Teilvolumen 6.2 wird radial außen von einem weiteren Hohlzylinder 13 begrenzt, der konzentrisch zum ersten Hohlzylinder 4 angeordnet ist, so dass das weitere Teilvolumen 6.2. durch einen Ringraum gebildet wird. Dieser Ringraum ist in axialer Richtung durch eine hülsenförmige Ausgleichsmasse 7 begrenzt, die hin- und herbeweglich auf dem ersten Hohlzylinder 4 angeordnet und in Richtung des Hydraulikvolumens 6 von einem Gasdruck beaufschlagt ist, der in einem Gasvolumen 10 herrscht. Das Gasvolumen 10 bildet somit eine Gasfeder aus, mittels welcher die Ausgleichsmasse 7 gegenüber dem Hydraulikvolumen 6 vorgespannt ist. Das Gasvolumen 10 ist über einen Gasanschluss 14 mit Gas beaufschlagbar. Der Gasanschluss 14 ist zusammen mit dem Hydraulikanschluss 3 in einem Deckelteil 17 ausgebildet. Bewegt sich demnach der Pumpenkolben 2 im Verdichtungstakt der Kolbenpumpe 1 von seiner unteren Endlage in seine obere Endlage (in der Fig. 1 "von oben nach unten"), führt das aus dem ersten Teilvolumen 6.1 in das weitere Teilvolumen 6.2 verdrängte Hydraulikmedium dazu, dass sich die Ausgleichsmasse 7 in die zur Bewegungsrichtung des Pumpenkolbens 2 entgegengesetzte Richtung bewegt (in der Fig. 1 "von unten nach oben"), und zwar gegen die Gasfeder. Auf diese Weise wird ein Ausgleich oszillierender Massenkräfte erreicht. Der an der Ausgleichsmasse 7 anliegende Gasdruck kann im Saugtakt der Kolbenpumpe 1 zugleich zur Rückstellung des Pumpenkolbens 2 von seiner oberen Endlage in seine untere Endlage genutzt werden.

Um zu verhindern, dass Hydraulikmedium aus dem Hydraulikvolumen 6 in das Gasvolumen 10 bzw. Gas aus dem Gasvolumen 10 in das Hydraulikvolumen 6 gelangt, weist die Ausgleichsmasse 7 mindestens einen Dichtring 8, 9 auf. Vorliegend dichten ein außenliegender und ein innenliegender Dichtring 8 das Gasvolumen 10 ab. Jeweils ein weiterer außenliegender und ein innenliegender Dichtring 9 dichten das Hydraulikvolumen 6 ab.

Das Kolbenteil 2.1 des Pumpenkolbens 2 weist außenumfangseitig zwei umlaufende Hydraulikdichtungen 11 auf, die den Druckraum 5 vom Hydraulikvolumen 6 trennen. Darüber hinaus ist jeweils eine Hydraulikdichtung 1 und eine Gasdichtung 15 in einer Führungsbohrung 19 zur Führung der Kolbenstange 2.2 angeordnet. Die weiteren Dichtungen 11, 15 dichten das Hydraulikvolumen 6 gegenüber einem Leckageraum 18 ab. Die Führungsbohrung 19 zur Führung der Kolbenstange 2.2 ist in einem Flanschbauteil 16 ausgebildet, das dem Deckelteil 17 am Hohlzylinder 4 gegenüberliegt.

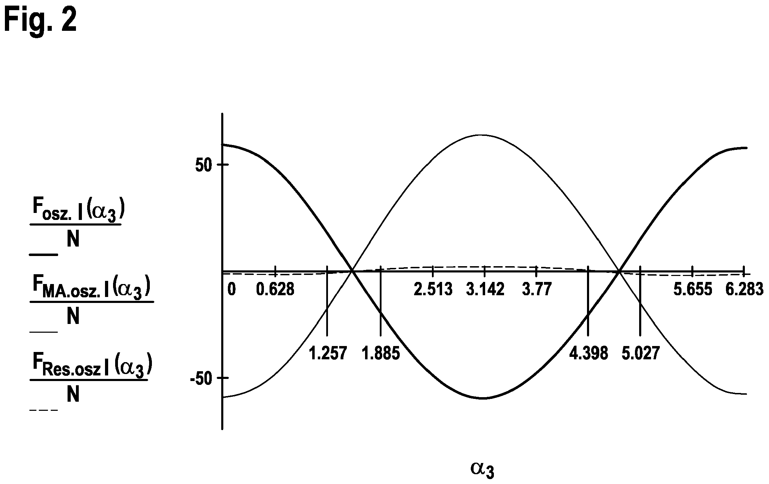

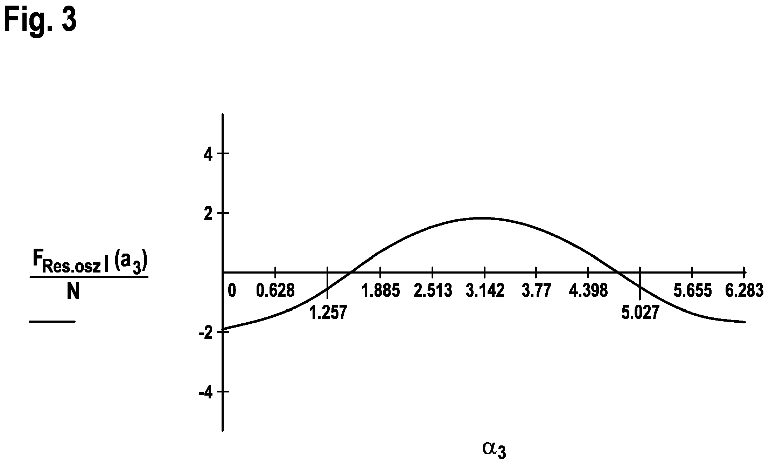

Die sich aufgrund der gegengleichen Bewegungen des Pumpenkolbens 2 und der Ausgleichsmasse 7 überlagernden Massenkräfte führen zu einer resultierenden Massenkraft, die verschwindend geringe Werte annimmt (siehe Fig. 2). Im Beispiel der Fig. 3 ergibt sich eine maximale freie Massenkraft von weniger als 2 N.

## Patentansprüche

1. Kraftstofffördereinrichtung für kryogene Kraftstoffe, umfassend eine Kolbenpumpe (1) zur Förderung des kryogenen Kraftstoffs auf Hochdruck, wobei die Kolbenpumpe (1) einen hin- und herbeweglichen Pumpenkolben (2) aufweist, der einenends einen Kompressionsraum und andernends einen in einem Hohlzylinder (4) ausgebildeten Druckraum (5) begrenzt, der mit einem hydraulischen Druckmittel beaufschlagbar ist, **dadurch gekennzeichnet, dass** der Pumpenkolben (2) einen Kolbenteil (2.1) und eine Kolbenstange (2.2) aufweist, wobei der Kolbenteil (2.1) den Druckraum (5) von einem Hydraulikvolumen (6) trennt, das ein innerhalb des Hohlzylinders (4) ausgebildetes erstes Teilvolumen (6.1) sowie mindestens ein außerhalb des Hohlzylinders (4) ausgebildetes und von einer hin- und herbeweglichen Ausgleichsmasse (7) begrenztes weiteres Teilvolumen (6.2) umfasst.

2. Kraftstofffördereinrichtung nach Anspruch 1,
**dadurch gekennzeichnet, dass** die Ausgleichsmasse (7) gegen das Hydraulikvolumen (6) mechanisch oder pneumatisch vorgespannt ist.

3. Kraftstofffördereinrichtung nach Anspruch 1 oder 2,
**dadurch gekennzeichnet, dass** die Masse der Ausgleichsmasse (7) im Wesentlichen der Masse des Pumpenkolbens (2) entspricht.

4. Kraftstofffördereinrichtung nach einem der vorhergehenden Ansprüche,
**dadurch gekennzeichnet, dass** die Ausgleichsmasse (7) ring- oder hülsenförmig ausgeführt und/oder konzentrisch in Bezug auf den Pumpenkolben (2) angeordnet ist.

5. Kraftstofffördereinrichtung nach einem der Ansprüche 1 bis 3,
**dadurch gekennzeichnet, dass** die Ausgleichsmasse (7) mehrteilig ausgeführt ist, wobei vorzugsweise die mehreren Teile in einer Ebene, in gleichem Winkelabstand zueinander und in gleichem radialen Abstand zum Pumpenkolben (2) angeordnet sind.

6. Kraftstofffördereinrichtung nach einem der vorhergehenden Ansprüche,
**dadurch gekennzeichnet, dass** die Ausgleichsmasse (7) mindestens einen innenumfangseitig und/oder außenumfangseitig angeordneten Dichtring (8, 9) aufweist, der das Hydraulikvolumen (6) gegenüber einem Gasvolumen (10) abdichtet.

7. Kraftstofffördereinrichtung nach einem der vorhergehenden Ansprüche,
**dadurch gekennzeichnet, dass** der Pumpenkolben (2) außenumfangseitig mindestens eine Hydraulikdichtung (11) zur Abdichtung des Hydraulikvolumens (6) gegenüber dem Druckraum (5) aufweist.

8. Kraftstofffördereinrichtung nach einem der vorhergehenden Ansprüche,
**dadurch gekennzeichnet, dass** im Hohlzylinder (4) mindestens eine Radialbohrung (12) zur Verbindung der Teilvolumina (6.1, 6.2) des Hydraulikvolumens (6) ausgebildet ist.

9. Kraftstofffördereinrichtung nach einem der vorhergehenden Ansprüche,
**dadurch gekennzeichnet, dass** das Hydraulikvolumen (6) radial außen durch einen weiteren Hohlzylinder (13) begrenzt wird.

## Claims

1. Fuel delivery device for cryogenic fuels, comprising a piston pump (1) for delivering the cryogenic fuel at high pressure, wherein the piston pump (1) has a pump piston (2), which pump piston is movable in reciprocating fashion and, at one end, delimits spa compression chamber and, at the other end, delimits a pressure chamber (5) which is formed in a hollow cylinder (4) and which can be charged with a hydraulic pressure medium, **characterized in that** the pump piston (2) has a piston part (2.1) and a piston rod (2.2), wherein the piston part (2.1) separates the pressure chamber (5) from a hydraulic volume (6), which hydraulic volume has a first volume part (6.1), which is formed within the hollow cylinder (4), and at least one further sub-volume (6.2), which is formed outside the hollow cylinder (4) and which is delimited by a compensating mass (7) which is movable in reciprocating fashion.

2. Fuel delivery device according to Claim 1,
**characterized in that** the compensating mass (7) is mechanically or pneumatically preloaded towards the hydraulic volume (6).

3. Fuel delivery device according to Claim 1 or 2,
**characterized in that** the mass of the compensating mass (7) substantially corresponds to the mass of the pump piston (2).

4. Fuel delivery device according to any one of the preceding claims,
**characterized in that** the compensating mass (7) is of ring-shaped or sleeve-shaped design and/or is arranged concentrically in relation to the pump piston (2).

5. Fuel delivery device according to any one of Claims 1 to 3,
**characterized in that** the compensating mass (7) is of multi-part design, wherein, preferably, the multiple parts are arranged in a plane, at uniform angular intervals with respect to one another and with an equal radial spacing to the pump piston (2).

6. Fuel delivery device according to any one of the preceding claims,
**characterized in that** the compensating mass (7) has at least one sealing ring (8, 9) which is arranged on the inner circumference and/or on the outer circumference and which seals off the hydraulic volume (6) with respect to a gas volume (10).

7. Fuel delivery device according to any one of the preceding claims,
**characterized in that** the pump piston (2) has, on the outer circumference, at least one hydraulic seal (11) for sealing off the hydraulic volume (6) with respect to the pressure chamber (5).

8. Fuel delivery device according to any one of the preceding claims,
**characterized in that**, in the hollow cylinder (4), there is formed at least one radial bore (12) for connecting the sub-volumes (6.1, 6.2) of the hydraulic volume (6).

9. Fuel delivery device according to any one of the preceding claims,
**characterized in that** the hydraulic volume (6) is delimited radially to the outside by a further hollow cylinder (13).

## Revendications

1. Dispositif d'alimentation en carburant pour carburants cryogéniques, comprenant une pompe à piston (1) pour alimenter le carburant cryogénique sous haute pression, la pompe à piston (1) présentant un piston de pompe à mouvement alternatif (2) qui délimite à une extrémité une chambre de compression et à l'autre extrémité une chambre de pression (5) réalisée dans un cylindre creux (4) et à laquelle un moyen de pression hydraulique peut être appliqué,
**caractérisé en ce que** le piston de pompe (2) présente une partie de piston (2.1) et une tige de piston (2.2), la partie de piston (2.1) séparant la chambre de pression (5) d'un volume hydraulique (6) qui comprend un premier volume partiel (6.1) réalisé à l'intérieur du cylindre creux (4) ainsi qu'au moins un autre volume partiel (6.2) réalisé à l'extérieur du cylindre creux (4) et délimité par une masse d'équilibrage à mouvement alternatif (7).

2. Dispositif d'alimentation en carburant selon la revendication 1, **caractérisé en ce que** la masse d'équilibrage (7) est précontrainte de manière mécanique ou pneumatique contre le volume hydraulique (6) .

3. Dispositif d'alimentation en carburant selon la revendication 1 ou 2, **caractérisé en ce que** la masse de la masse d'équilibrage (7) correspond substantiellement à la masse du piston de pompe (2).

4. Dispositif d'alimentation en carburant selon l'une quelconque des revendications précédentes, **caractérisé en ce que** la masse d'équilibrage (7) est réalisée en forme de bague ou de douille et/ou est disposée de manière concentrique par rapport au piston de pompe (2).

5. Dispositif d'alimentation en carburant selon l'une quelconque des revendications 1 à 3, **caractérisé en ce que** la masse d'équilibrage (7) est réalisée en plusieurs parties, les plusieurs parties étant de préférence disposées dans un plan, à une même distance angulaire les unes par rapport aux autres et à une même distance radiale par rapport au piston de pompe (2).

6. Dispositif d'alimentation en carburant selon l'une quelconque des revendications précédentes, **caractérisé en ce que** la masse d'équilibrage (7) présente au moins une bague d'étanchéité disposée côté circonférence intérieure et/ou côté circonférence extérieure (8, 9) et qui rend le volume hydraulique (6) étanche par rapport à un volume de gaz (10).

7. Dispositif d'alimentation en carburant selon l'une quelconque des revendications précédentes, **caractérisé en ce que** le piston de pompe (2) présente côté circonférence extérieure au moins un joint d'étanchéité hydraulique (11) pour rendre le volume hydraulique (6) étanche par rapport à la chambre de pression (5).

8. Dispositif d'alimentation en carburant selon l'une quelconque des revendications précédentes, **caractérisé en ce que** dans le cylindre creux (4), au moins un alésage radial (12) est réalisé pour relier les volumes partiels (6.1, 6.2) du volume hydraulique (6) .

9. Dispositif d'alimentation en carburant selon l'une quelconque des revendications précédentes, **caractérisé en ce que** le volume hydraulique (6) est délimité radialement à l'extérieur par un autre cylindre creux (13).
